**Europäisches Patentamt**

**(19)** **European Patent Office**

**Office européen des brevets**

**(11)** **EP 0 582 632 B1**

**(12)** # EUROPEAN PATENT SPECIFICATION

**(45)** Date of publication and mention
of the grant of the patent:
**31.03.1999 Bulletin 1999/13**

**(21)** Application number: **92910037.8**

**(22)** Date of filing: **27.02.1992**

**(51)** Int. Cl.$^6$: **C01B 17/05**, B01D 53/34,
B01D 61/02, B01D 53/14,
B01D 61/58

**(86)** International application number:
**PCT/US92/01592**

**(87)** International publication number:
**WO 92/17401 (15.10.1992 Gazette 1992/26)**

**(54) PROCESS AND APPARATUS FOR REMOVAL OF H2S FROM GASEOUS STREAMS USING MEMBRANE PURIFICATION OF RECYCLE SOLUTION**

VERFAHREN UND VORRICHTUNG ZUR ENTFERNUNG VON H2S AUS GASSTRÖMEN UNTER ANWENDUNG VON MEMBRANREINIGUNG DER KREISLAUFLÖSUNG

PROCEDE ET APPAREIL POUR ELIMINER LE H2S CONTENU DANS DES COURANTS GAZEUX GRACE A LA PURIFICATION PAR MEMBRANE DE LA SOLUTION DE RECYCLAGE

**(84)** Designated Contracting States:
**AT BE CH DE DK ES FR GB GR IT LI LU MC NL SE**

**(30)** Priority: **28.03.1991 US 676404**

**(43)** Date of publication of application:
**16.02.1994 Bulletin 1994/07**

**(73)** Proprietor:
**THE DOW CHEMICAL COMPANY
Midland, Michigan 48674 (US)**

**(72)** Inventors:
• **GRIERSON, Jeffrey, G.
Angleton, TX 77515 (US)**
• **ALLEN, Mark, C.
Lake Jackson, TX 77566 (US)**

**(74)** Representative:
**Burford, Anthony Frederick
W.H. Beck, Greener & Co.
7 Stone Buildings
Lincoln's Inn
London WC2A 3SZ (GB)**

**(56)** References cited:
**DE-A- 3 444 252       US-A- 4 758 416
US-A- 4 808 385       US-A- 4 834 886
US-A- 4 921 683**

Remarks:
The file contains technical information submitted after the application was filed and not included in this specification

EP 0 582 632 B1

**Description**

This invention relates to an improved process and apparatus for the removal of hydrogen sulfide ($H_2S$) from gaseous streams by contact with an oxidizing metal ion, whereby $H_2S$ is converted to elemental sulfur. More specifically, this invention relates to a process and apparatus for $H_2S$ removal wherein a reaction solution containing an oxidizing metal ion chelate is continuously renovated as part of a recycle operation.

It is known that certain polyvalent metal ions such as derived from vanadium, manganese, iron, and nickel are capable of oxidizing hydrogen sulfide ($H_2S$) to elemental sulfur in liquid media. These polyvalent metal ions are typically employed in aqueous solution in the form of water-soluble chelates. Particularly preferred are ferric ion chelates. Suitable chelants include aminocarboxylic acids such as nitrilotriacetic acid (NTA), ethylenediaminetetraacetic acid (EDTA), and N-hydroxyethyl ethylenediaminetricarboxylic acid (HEDTA). Contact of gaseous streams containing $H_2S$ with solutions of such ferric ion chelates can be a highly effective process for the removal and conversion of gaseous $H_2S$ to solid elemental sulfur.

An example of an $H_2S$ removal process in commercial usage is the SulFerox$^{SM}$ process developed by the Shell Oil Company. Such a process comprises the following steps. First, an $H_2S$-containing gaseous stream is brought into contact with a reaction solution comprising a ferric ion chelate in a gas-liquid contactor. The $H_2S$ is therein oxidized to elemental sulfur, the latter forming a solid suspension in the reaction solution, while ferric ion is simultaneously reduced to ferrous ion. This type of chemical reaction is often referred to as a redox (reduction-oxidation) reaction, the reaction solution being referred to as a redox solution. Second, the chelate solution is separated from the gas stream, filtered to remove sulfur, then treated with an oxygen-containing gas to regenerate the ferric ion form of the chelate. Third, the regenerated reaction solution is recycled to the gas-liquid contactor. If oxygen is present in the $H_2S$-containing gas stream, simultaneous regeneration of the iron chelate can be attained. If carbon dioxide ($CO_2$) is present in the gaseous stream, absorption of $CO_2$ by the reaction solution occurs. Degasification of the reaction solution is commonly employed in such a case before filtration. The filtered sulfur cake is usually processed further through a melting operation to refine the elemental sulfur.

Under certain operating conditions, such a process may have several limitations. Water and contaminants are introduced into the reaction solution from the gaseous stream. Dilution of the polyvalent metal ion chelate content by water absorption, and water generation by the redox reaction may be troublesome, requiring addition of more polyvalent metal ion chelate compound, or evaporative reconcentration of the reaction solution, or even the replacement of the reaction solution by fresh solution. Contaminants can be organic compounds such as hydrocarbons, or inorganic compounds such as sulfate salts. Organic compounds can interfere with the melt refining of the sulfur cake, producing a black sulfur that is unsalable. Degasification of the reactant solution after the gas-liquid separation step can be beneficial in removing the volatile portion of such hydrocarbons and organic compounds. Inorganic compounds can build up to levels that interfere in the $H_2S$ absorption-conversion step, leading to replacement of the reaction solution. Degradation of the chelants also occurs, producing byproducts such as formate and oxalate. Ferric ion itself catalyzes degradation of the chelants by oxygen in the regeneration process. The elevated temperatures at which these processes commonly operate also promote decomposition reactions. Chelant life can be improved by inclusion of stabilizers such as N,N-diethylhydroxylamine, thiourea, thiosemicarbazide, or mixtures thereof as described in US-A-4,400,368. Alternatively, electrolytic regeneration of the chelate solution has been described in US-A-4,436,714 to replace the use of oxygen. These approaches do not totally eliminate formation of chelant degradation products. Furthermore, neither process removes water or contaminants introduced into the reaction solution during the gas treatment operation.

US-A-4,808,385 describes a process employing polymeric chelants of molecular weight between 1,000 and 500,000 daltons, wherein dialysis or ultrafiltration membranes could be used to remover water and contaminants having molecular weights below 500. This process requires the use of polymeric chelates. However, monomeric chelants such as NTA, EDTA, and HEDTA are preferred in $H_2S$ removal processes due to their lower cost and other considerations. Metal ion chelates formed from these monomeric chelants, having molecular weights below 500, would be lost in the membrane process described in US-A-4,808,385.

DE-A-3444252 discloses a process for the removal of $H_2S$ from a gaseous stream containing water by contacting the gaseous stream with a reaction solution comprising a polyvalent metal chelate complex to convert $H_2S$ to elemental sulfur and the metal of the complex to a lower valency state and oxidizing the spent reaction solution to produce a regenerated reaction solution for recycle to contact additional gaseous stream. The characterizing feature of the process is that the gaseous stream/reaction solution contact and/or regeneration is carried out in pulsating column(s). Preferably, the contact and regeneration are carried out in a common pulsating column and at the same pressure.

In all three embodiments described DE-A-3444252, the reaction solution is regenerated prior to separation of suspended sulfur from the spent reaction solution. The sulfur is removed as a sludge, which is centrifuged and the clarified solution treated by reverse osmosis to remove water and (in translation) "by-products which occur due to absorption of materials other than hydrogen sulfides, for example HCN and $NH_3$" as permeate. The resultant nonpermeate concentrate portion is combined with remaining reaction solution.

A need continues to exist for a means to control the concentration of a polyvalent metal ion chelate in a reaction solution being used in a cyclic process for $H_2S$ removal from gaseous streams, wherein commonly accepted monomeric chelants such as NTA, EDTA or HEDTA are employed. In applications where $H_2S$ is associated with high water vapor concentrations, such as in the treatment of geothermal steam, this need is critical. Furthermore, a need continues to exist for a means to control the build-up of undesirable compounds in the reaction solution, such as chelant degradation products, inorganic salts, and low molecular weight organic contaminants. This invention addresses both of these needs simultaneously.

Accordingly, the present invention provides a process for the removal of hydrogen sulfide from a gaseous stream comprising:

a) contacting the gaseous stream with a reaction solution comprising an oxidizing polyvalent metal ion bound to a monomeric chelant so as to convert hydrogen sulfide to elemental sulfur;

b) separating the reaction solution containing elemental sulfur suspended therein from the gaseous stream;

c) treating at least a portion of the separated reaction solution by a filtration step to produce a fully clarified reaction solution filtrate essentially free of suspended sulfur;

d) contacting the fully clarified reaction solution with a nanofiltration membrane to produce a permeate portion comprising water and solutes of up to 225 molecular weight dissolved therein, and a nonpermeate concentration portion comprising water and the polyvalent metal ion bound to the monomeric chelant;

e) combining the nonpermeate concentrate portion with any of the separated reaction solution not converted to fully clarified reaction solution to form a combined stream;

f) oxidizing the polyvalent metal ion in the combined stream to produce a regenerated reaction solution; and g) recycling the regenerated reaction solution to (a).

The filtration step c) may consist of either a single step or multi-step operation. It may itself consist of a membrane filtration step such as microfiltration or ultrafiltration. The nanofiltration membrane removes excess water from the reaction solution, producing a concentrate stream of the polyvalent metal ion chelate. The nanofiltration membrane also removes chelant degradation products and other reaction solution contaminants, improving the usable life of the reaction solution. The invention is particularly useful in the treatment of sour gas streams high in $H_2S$ content and geothermal steam vapors containing $H_2S$.

FIG. 1 is a schematic diagram of a system for the removal of $H_2S$, incorporating membrane nanofiltration, for redox solution purification.

FIG. 2 is a schematic diagram of a system for removal of $H_2S$ from gas streams wherein pre-nanofiltration clarification of the redox solution is accomplished by a single filter step.

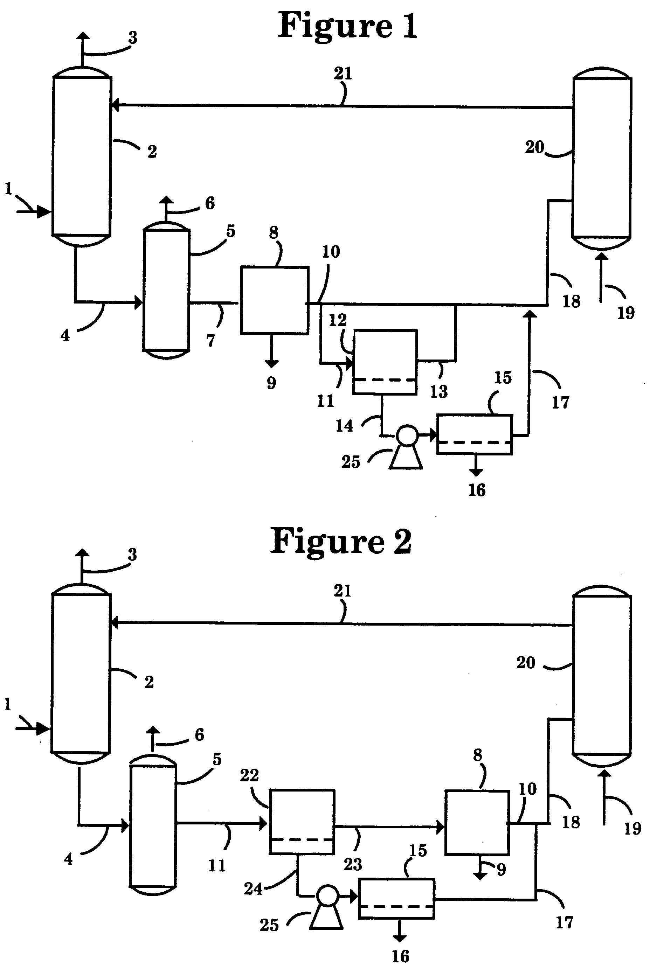

FIG. 1 illustrates a process in accord with this invention wherein an aqueous reaction solution is employed in the removal of $H_2S$ from a gaseous stream, followed by treatment and recycle of the reaction solution. A gaseous stream containing $H_2S$ is fed by means of line 1 to gas-liquid contactor 2 wherein oxidation of $H_2S$ to elemental sulfur occurs through contact with a reaction solution introduced via line 21. The treated gaseous stream then exits through line 3. Spent reaction solution containing a suspension of elemental sulfur produced by the oxidation step exits the gas-liquid contactor by line 4. A degasifier unit 5 is optionally employed at this point to remove volatile gases via line 6. Reaction solution containing suspended sulfur is fed through line 7 to a filter unit 8 for removal of sulfur solids 9. The filtered solution, still containing some sulfur fines, is removed as an exit stream 10 and is conducted to a regenerator unit 20 via an inlet line 18. A portion of this partially clarified reaction solution is drawn off through line 11 and fed to a second filtration unit 12 wherein sulfur fines are removed so as to provide a fully clarified stream 14 of reaction solution. Depending upon the type of filtration unit 12 employed in the process, a byproduct stream enriched in content of sulfur fines may be produced, and would be returned via line 13 to the process. The fully clarified reaction solution 14 is pressurized by a pump 25 and fed to a nanofiltration unit 15 wherein a portion of the water and low molecular contaminants contained therein are drawn off as a waste stream 16. The concentrate stream from the nanofiltration unit is returned via line 17 to the process. The regenerator unit 20 restores the oxidizing power of the reaction solution that was expended in the hydrogen sulfide removal step. This may be achieved electrochemically or by contact with a chemical oxidant, such as oxygen, introduced through line 19. Treated and regenerated reaction solution is then recycled to the gas-liquid contactor through line 21.

Figure 2 shows an another embodiment of this invention. The sulfur suspension in line 4 from contact of an $H_2S$-containing gas with reaction solution in the gas-liquid contactor 2 is optionally fed to a degasifier 5 as before, and then directed through line 11 to a filtration unit 22. This filtration unit is of a cross-flow design and produces both a concentrate stream via line 23 enriched in the elemental sulfur suspension, and a fully clarified permeate stream 24 essentially free of elemental sulfur. The fully clarified reaction solution 24, raised to an elevated hydraulic pressure by a pump 25, is fed to a nanofiltration unit 15 as before to produce both a concentrate stream of metal ion chelate that is returned to the process via line 17, and a waste stream 16 containing water and low molecular weight contaminants. The enriched sulfur suspension in line 23 is fed to a sulfur filtration unit 8, producing both a sulfur solids 9 byproduct and an exit stream 10 of partially clarified reaction solution suitable for regeneration and recycle to the gas-liquid contactor.

The skilled artisan will recognize that multiple variations of the process illustrated are possible. Such variations include one or more recycle streams about one or more unit operations such as degasification 5, or filtration 8, 22. Further combinations are possible by processing less than the entire volume of a stream such as 11, 14, 24. This invention is not limited by the embodiments illustrated.

Hydrogen sulfide gas is contained in various gaseous streams. Sources include oil and natural gas wells, geothermal steam-based energy installations, oil refinery off-gases, biogas generators, and chemical industry process streams. It may be present as a dilute component in natural gas source rich in methane and carbon dioxide. Alternatively, it may be present as a major component in refinery or chemical process gas streams. Hydrogen sulfide may also be entrained in air, such as by air-stripping of volatile gases from an aqueous stream. It is a highly toxic gas, also notable for its highly obnoxious odor even at very low concentrations.

Contact of a gaseous stream containing hydrogen sulfide with an aqueous absorption solution is very effective in the removal of hydrogen sulfide, if the aqueous absorption solution contains an oxidizing metal ion capable of converting hydrogen sulfide to elemental sulfur. A reduction-oxidation (redox) chemical reaction takes place between the oxidizing metal ion and the hydrogen sulfide, whereby sulfide is oxidized to sulfur concomitant with reduction of the metal ion from a higher valence state to a lower valence state. The metal ion can subsequently be treated to restore it to the higher valence state. Optimally, both the lower and higher valence states of the polyvalent metal ion are ionic valence states. Suitable metal ions for the oxidation of hydrogen sulfide are ions derived from iron, vanadium, copper, manganese and nickel. Particularly preferred are ions derived from iron, the higher (i.e. oxidized) valence state being ferric ion and the lower (i.e. reduced) valence state being ferrous ion. Operable concentrations of the oxidizing polyvalent metal ion in the reaction solution will range from 0.01 percent to 7 percent by weight based on the weight of the reaction solution. Preferable concentrations will range from 1 percent to 6 percent by weight of the oxidizing polyvalent metal ion.

The oxidizing polyvalent metal ion is preferably employed in a water-based solution as a soluble coordination compound in which the metal ion is bound to a chelant. A chelant may be defined as a molecule which contains two or more coordinating groups capable of associating with a metal ion to form a coordination compound. The coordination compound which results from the binding of the metal ions by the chelant or chelants may be referred to as a metal ion chelate. Preferred chelants are organic polycarboxylic acids such as citric acid or aminopolycarboxylic acids. Particularly preferred are aminopolycarboxylic acids derived from ammonia, ethylenediamine, propylenediamine, or 2-hydroxyalkyl amines. Examples of such chelants which may be advantageously used include nitrilotriacetic acid (NTA), ethylenediaminetetraacetic acid (EDTA), N-hydroxylethylethylenediamine-N,N',N'-triacetic acid (HEDTA), diethylenetriamine-N,N,N',N'',N''-pentaacetic acid, nitrilotripropionic acid, and ethylenediaminetetrapropionic acid. These may be employed as the acids or their salts, particularly their ammonium or alkali salts. Mixtures of these acids or their salts may be used. Mixtures of the aminopolycarboxylic acid chelants with other chelants such as citric acid or its salts may also be used. As used herein the term "monomeric chelant" includes mixtures of monomeric chelant compounds. Especially preferred as oxidizing polyvalent metal ion chelates are the ferric ion chelates formed from NTA, EDTA or HEDTA. Operable concentrations of chelant may range widely, but are preferably at least equimolar with the oxidizing polyvalent metal ion. An excess of the chelant may advantageously be employed, e.g., 10 to 40 mole percent excess, relative to the polyvalent metal ion.

Additives other than the polyvalent metal ion and the chelant may be present in the reaction solution to reduce the rate of degradation of the organic chelant compounds. US-A-4,400,368, describes the use of N,N-diethylhydroxylamine, thiourea, thiosemicarbazide and their mixtures as stabilizing additives for aminopolycarboxylic acid chelants. They may be employed at concentrations of 0.005 to 0.5 molar, preferably at concentrations of 0.03 to 0.3 molar.

The reaction solution containing the oxidizing metal ion chelate is brought into contact with the gaseous $H_2S$ stream in a gas-liquid contactor. Types of operable gas-liquid contactors include, but are not limited to, packed towers, sparged towers, spray towers, pipeline contactors and venturi scrubbers. The preferred choice of gas-liquid contactor type will depend upon performance requirements for each use, including inlet feed pressure range, allowable system pressure drop, $H_2S$ inlet concentrations, restriction requirements on $H_2S$ exit concentrations, and presence of other condensable gases such as steam from geothermal wells.

During gas-liquid contact with a gaseous stream, the redox reaction of $H_2S$ with the oxidizing metal ion chelate produces elemental sulfur and a reduced (i.e., non-oxidizing) valence state of the chelated metal ion. The sulfur is generated as a particulate dispersion in the aqueous metal ion chelate solution. If oxygen or other oxidizing gas is present in the gaseous stream in the gas-liquid contactor, the reduced metal ion can be oxidized to its original valence state, which is oxidizing toward $H_2S$. Otherwise, it remains in its reduced valence state until subsequently being treated in a regenerator to regenerate the original oxidizing valence state.

The metal ion chelate solution containing the elemental sulfur dispersion is separated from the treated gaseous stream and is drawn into a loop for treatment and recycle. If this aqueous dispersion contains a significant loading of solubilized gases such as carbon dioxide by virtue of the composition of the incoming gaseous stream, the pressure of the incoming gaseous stream, or combinations of said composition and pressure, removal of the solubilized gases by transport of the metal ion chelate solution through a degasifier is advantageously employed in the process. The degasifier unit is preferentially located as the first treatment unit in the process loop downstream from the gas-liquid contactor. Removal of solubilized volatile gases from the metal ion chelate solution is effected in the degasifier unit so as to enable handling of the aqueous reaction solution at ambient or moderate pressure in subsequent treatment steps.

Most or all of the metal ion chelate solution is passed through a first filtration unit for removal of the bulk of the suspended elemental sulfur. This first filtration unit may include a preconcentration step whereby the hydraulic loading to the filter may be reduced. A hydrocyclone or, more simply, a thickening vessel such as a settling tank, may be used for preconcentration purposes. Alternatively, as will be described later, a membrane-based filtration unit may also be used for preconcentration of suspended sulfur. Filterability of the elemental sulfur dispersion will vary depending upon process conditions.

A highly filterable particulate size range for the suspended elemental sulfur is, for example, 75 to 150 micrometers. Such a particulate size range may be advantageously obtained by the SulFerox[SM] process (vide supra). In any elemental sulfur dispersion obtained by the redox reaction, however, some particulate sulfur of much lower particle sizes, including particles of micro-meter and sub-micro-meter diameters, will also be present. These latter particulates (i.e. sulfur fines) will be incompletely removed by the filtration unit, and will be present in the filtrate. The filtrate from the sulfur filtration unit, combined with any filter bypass streams (as from a hydrocyclone or thickening vessel, for example) is customarily sent on through the process loop to the regenerator. The elemental sulfur removed as a filter cake by the filtration unit may be sent on to a separate process for refining, such as a sulfur melter.

Since the oxidizing metal ion is reduced to a lower valence state in its reaction with hydrogen sulfide, it is necessary to oxidize the metal ion to its original valence state in order to reuse it. This oxidation is preferably accomplished by passing the metal ion chelate solution through a regenerator. The regenerator may be selected from gas-liquid contactor devices. Regeneration of the oxidizing metal ion valence state may be achieved therein by contact with an oxidant, preferably oxygen or an oxygen-containing gas. Air is advantageously used as an inexpensive source of oxygen. An alternative process may be used involving contact of the metal ion chelate solution with an electrochemical device wherein an electric current is supplied through electrodes in contact with the liquid at an electromotive potential sufficient to oxidize the polyvalent metal ion from its lower valence state to its original oxidizing valence state. Regeneration of the metal ion chelate solution may also be accomplished by means of liquid or solid oxidizing compounds added to the metal ion chelate solution. Such compounds may include, for example, peroxides or active chlorine species. The choice of any of these methods to be employed for reaction solution regeneration will naturally be based on cost, ease of operation, and other considerations. The oxidizing metal ion chelate solution leaving the regenerator unit is then recycled to the gas-liquid contactor.

A portion of the metal ion chelate solution is drawn off from the process treatment loop and passed through a secondary process treatment loop involving a second filtration unit and a nanofiltration membrane unit. This second filtration unit is chosen on the basis of its ability to provide a fully clarified filtrate essentially free of suspended elemental sulfur, including sulfur fines, to the nanofiltration unit. This second filtration unit may consist of any of several basic types, such as a granular bed filter, a precut drum filter, a fibrous cartridge filter, or a cross-flow filter. Cost and ease of operation will affect the selection of the type of filtration unit to be employed so long as it meets the basic requirement of providing a sulfur-free filtrate. Cross-flow filter designs are particularly advantageous. In these designs, feed solution is swept through the unit across the filtering surface, and only a fraction of the feed solution is drawn off through the filtering surface. The feed solution thereby minimizes the build-up of a layer of filter cake on the filtering surface, by sweeping away most or all of the particulate matter that would otherwise deposit on the filtering surface. Suitable cross-flow filtration devices may consist of plate-and-frame, accordion-folded, spiral-wound, or tubular designs.

Plate-and-frame devices include flat plates of rectangular, round or oval peripheries stacked within a frame in a manner so as to provide defined passageways for feed solution and filtrate. Plate-and-frame devices may also include plates in the form of discs mounted on a central axial hollow frame which is rotatable so as to spin the discs through the feed solution.

Accordion-folded devices include pleated cartridge filters with the pleated filtration media arranged in either a cylindrical or a rectangular cartridge form.

Spiral-wound devices include designs containing filter media leaves wrapped helically around a hollow mandrel, with a feed solution passageway being defined between the active filtering surfaces of successive layers of the filter leaves, flow of the feed solution being in an axial direction from end to end of the spiral-wound design, filtrate being removed through a separate passageway internally in the membrane leaves in open connection with the interior of the hollow mandrel.

Tubular designs may include hollow tubes of outer diameters ranging from 5 centimeters to as low as 0.2 centimeter. Internal tubular diameters may range from 4.8 centimeters to as low as 0.05 centimeter. Preferably, the outer diameters of hollow tubes will range from 2.5 centimeters to 0.2 centimeter, more preferably from 1.3 centimeters to 0.3 centimeter, and internal diameters will range accordingly. These tubular membranes are typically housed in tube-in-shell designs, and feed solution may be provided either to the shell side of the tubular membranes or through the bore of the tubular membranes. For most such tubular membranes, bore-side flow of the feed solution is preferred.

Compositions suitable for use as the filtering surface in cross-flow filtration devices may be composed of inorganic materials, organic materials, or combinations of inorganic and organic materials. Inorganic materials may include sintered metals, porous glass, porous compacted carbon, or ceramic compositions. Organic materials will generally be polymeric in nature, and may consist of polyethylene, polypropylene, polyvinyl chloride, polyvinylidene fluoride, polyacrylonitrile, various aliphatic polyamides, aromatic polyamides, polysulfone, polyetheretherketone (PEEK), cellulose, chemically modified cellulosic polymers, or almost any synthetic polymer that can be formed or shaped to design requirements. Preferred filtering surfaces formed from these materials will generally fall into the classes of membranes described as microfiltration membranes and ultrafiltration membranes. A wide variety of such membranes are commercially available for filtration purposes.

If a cross-flow filtration is employed, a concentrate will be produced in addition to a filtrate. This concentrate will be enriched in those components which do not permeate through the filtering surface, principally particulate matter that is suspended in the feed solution to the second filtration unit. A primary constituent of this suspended particulate matter is elemental sulfur. If the feed solution to the second filtration unit is drawn from the first process loop downstream of the first filtration unit, elemental sulfur will be present predominantly as fines that have not been completely removed by the first filtration step. If the feed solution to the second filtration unit is drawn from the first process loop upstream of the first filtration unit, the complete range of suspended elemental sulfur will be present. When the second filtration step uses cross-flow filtration, this cross-flow filtration step may occasionally be advantageously employed as a preconcentration step for suspended elemental sulfur, the concentrate stream being returned to the primary process loop at a point upstream from the inlet into the first sulfur filtration unit. In most cases, however, it will be more advantageous to draw feed solution from the primary process loop downstream from the first filtration unit for delivery to the second filtration unit. In this case, when cross-flow filtration is employed, the concentrate stream can be returned to the primary process loop at points either upstream or downstream from the first filtration unit. A return point downstream from the first filtration unit is generally preferred in this latter case.

The filtrate from the second filtration step is to be fully clarified, that is, to be essentially free of all suspended elemental sulfur. A fully clarified reaction solution is defined in this case to be a solution having a silk density index (SDI-15) of less than 6.0 as measured according to ASTM D4189-82 Standard Test Method for Silt Density Index (SDI) of Water. Preferably the fully clarified reaction solution will have an SDI-15 of less than 5.0, more preferably less than 3.0, because of the fouling propensity of elemental sulfur particles toward nanofiltration membrane surfaces. The fully clarified reaction solution is to be otherwise optimally about the same as the feed solution to the second filtration unit in respect to content of dissolved inorganic salts and low molecular weight organic solutes of up to 225 molecular weight. All or a portion of this essentially sulfur-free filtrate is fed to a membrane device containing a nanofiltration membrane effective for removal of water, inorganic salts and low molecular organic solutes from the clarified metal ion chelate solution. Low molecular weight is defined in this context to be 225 daltons or less. Suitable nanofiltration membrane devices may consist of plate-and-frame, accordion-folded, spiral-wound or tubular designs. Particularly advantageous are spiral-wound and hollow fiber devices, in that these designs incorporate a high packing of active membrane per unit volume and are ideally suited to treatment of feed solutions that have been fully clarified in a preceding filtration step.

The nanofiltration membrane device may be operated at hydraulic pressures on the feed side over a wide range, provided the membrane will tolerate the transmembrane pressure. A pressure in the range of 50 to 1500 psig (0.35 to 10 MPa) is generally advantageous, preferably 100 to 1000 psig (0.7 to 7 MPa), more preferably 200 to 800 psig (1.4 to 5.5 MPa). Actual selection of a hydraulic feed pressure will depend upon several factors, including membrane type, the total solute concentration of the reaction solution being provided as feed to the device, the reaction solution temperature, the membrane permeation rate to water and to reaction solution contaminants as a function of transmembrane pressure difference, and the pressure limitations of the membrane device. These hydraulic feed pressures are conveniently provided by means of a pressurizing pump, the selection of which is readily made by the skilled artisan.

The temperature of the feed solution to the membrane device may vary from 0 to 95° C, provided the membrane and associated components are not deleteriously affected. However, the feed temperature is preferably controlled to not exceed 45° C in most cases to avoid the problems of potential creep or distortion of components in membrane devices, particularly plastic or rubber components, which may occur at conditions of high temperature and pressure.

The nanofiltration membrane device receives the fully clarified metal ion chelate solution and operationally converts it into two exit streams: a concentrate stream selectively enriched in the metal ion chelate, and a permeate stream depleted in the metal ion chelate. The concentrate stream enriched in metal ion chelate is recycled to the primary process loop. The permeate is either discarded from the process or treated further. Further treatment may include recycle through a second stage nanofiltration membrane device for additional recovery of metal ion chelate moieties that may have permeated through the initial nanofiltration membrane device. Preferably, a nanofiltration membrane is selected for the initial nanofiltration treatment step that eliminates the need for such additional treatment of the permeate from this initial nanofiltration step. The nanofiltration membrane should be capable of permeating water, inorganic salts dissolved therein, and low molecular weight organic compounds of up to 225 molecular weight dissolved therein, while effectively concentrating metal ion chelate moieties of 250 molecular weight or higher. Examples of membranes meeting these requirements are contained in US-A-4,247,401 and US-A-4,834,886. US-A-4,247,401 describes porous asymmetric membranes formed from acetylated cellulose modified with covalently bonded dyestuffs. US-A-4,834,886 describes thin film composite membranes in which the active permselective layer is a crosslinked polyvinyl alcohol. Membrane compositions other than these are also possible.

The following examples are presented to further illustrate this invention, but are not intended to limit the scope of the invention. In these examples, solute permeation is expressed as percent passage, defined as 100-R, where R equals:

$$\frac{C_{feed} - C_{permeate}}{C_{feed}} \times 100$$

$C_{feed}$ is the average concentration of a solute in the feed solution during collection of a permeate sample. $C_{permeate}$ is the concentration of a solute in the permeate sample. All solute concentrations are on a weight basis unless otherwise indicated.

Example 1

One liter of a reaction solution containing ferric nitrilotriacetate (FeNTA) is obtained from an installation operating on a wellhead natural gas stream containing hydrogen sulfide gas. This solution contains 1751 mg/l sulfate ion, 1.06 percent oxalate ion and 1.7 percent dissolved iron. It is placed into a laboratory loop consisting of a feed reservoir, a pump, a membrane device, and a heat exchanger. The FeNTA-containing feed is pumped at 2.8 liters per minute through the membrane device at 500 psig (2.5 MPa), with pressure being maintained and regulated by means of a back pressure valve downstream from the membrane device. A membrane having a surface area of approximately $0.025m^2$ containing an active layer consisting of crosslinked polyvinyl alcohol, made according to the method described in US-A-4,834,886 and obtained from FilmTec Corporation, Minneapolis, Minnesota USA, is used in this example. The temperature of the feed is 27°C at the beginning of the run and 32°C at the end of the run. Table 1 shows data on the volumetric percent solution removed as permeate, the flux of permeate through the membrane, and the percent passage of sulfate, oxalate and dissolved iron through the membrane. It can be seen that dissolved iron passage was very low relative to passage of sulfate and oxalate. The degree of passage of these dissolved solutes is observed to increase as the FeNTA solution becomes more concentrated through removal of water by the membrane device.

Table 1

| Permeate Sample No. | % Solution Removed | Flux 1/hr/m$^2$ | Sulfate % Passage | Oxalate % Passage | Iron % Passage |
|---|---|---|---|---|---|
| 1 | 4.5 | 5.1 | 32 | 18 | 2 |
| 2 | 7.5 | 5.9 | 32 | 18 | 2 |
| 3 | 10.5 | 4.8 | 32 | 18 | 3 |
| 4 | 13.5 | 4.6 | 31 | 18 | 3 |
| 5 | 16.5 | 4.4 | 36 | 23 | 3 |
| 6 | 19.5 | 4.1 | 42 | 24 | 3 |

Table 1 (continued)

| Permeate Sample No. | % Solution Removed | Flux $1/hr/m^2$ | Sulfate % Passage | Oxalate % Passage | Iron % Passage |
|---|---|---|---|---|---|
| 7 | 22.5 | 4.0 | 44 | 25 | 3 |
| 8 | 25.5 | 3.4 | 51 | 29 | 4 |
| 9 | 28.5 | 3.0 | 61 | 33 | 5 |
| 10 | 31.5 | 2.6 | 63 | 32 | 4 |

Example 2

A solution containing FeNTA is contacted with a wellhead natural gas containing methane, carbon dioxide, hydrogen sulfide and water vapor. The spent reaction solution containing suspended elemental sulfur is separated from gas stream contact, is passed through a degasifier, then is passed through a belt filter for removal of sulfur. A portion of this solution is placed in a loop containing a pump, a 5-micrometer cartridge filter, a membrane device holding a flat sheet of nanofiltration membrane, a backpressure regulator, and a feed solution temperature control bath. A membrane made corresponding to US-A-4,259,183 designated FILMTEC™ NF40, obtained from FilmTec Corporation, is mounted in the membrane device as described in Example 1. A feed flow rate of 3.6 liters per minute is pumped through the membrane device. Feed temperature is 43-49°C and feed hydraulic pressure is 600 psig (4 MPa). The feed solution volume is reduced by one-third through removal of permeate through the nanofiltration membrane. The feed and permeate are analyzed for content of dissolved iron, nitrilotriacetic acid, oxalate ion, formate ion and sulfate ion. Average sulfate passage through the membrane is 4 percent, formate passage 40 percent, oxalate passage 11.6 percent, dissolved iron passage 0.4 percent and NTA passage 0.2 percent. Thus, approximately 99.6 to 99.8 percent of FeNTA is retained in the nanofiltration concentrate.

Example 3

Metal ion chelate solution from the same source as in Example 2 is placed in the nanofiltration loop as before. A membrane designated as XP20 obtained from FilmTec Corporation and made corresponding to US-A-4,834,886 is mounted in the membrane device according to Example 1. The feed solution is pumped through the membrane device at 3.6 liters per minute. Feed pressure is 500 psig (3.5 MPa) and temperature is 41 to 43°C. Feed solution volume is reduced by one third, and analyses are performed on feed and permeate. The average passage rate for various components through the membrane are as follows: dissolved iron 1.9 percent, NTA 8.6 percent, oxalate 58.4 percent, formate 48.2 percent, and sulfate 52.8 percent. Thus, approximately 98 percent of the FeNTA is retained in the concentrate. The NTA is present at about a 25 percent molar excess to ferric ion in the initial feed solution, and the higher passage of NTA versus dissolved iron is due to passage of free non-chelated NTA through this membrane

Example 4

In a SulFerox[SM] installation operating on a wellhead natural gas stream containing $H_2S$, reaction solution containing a suspension of sulfur is separated from the gas-liquid contactor, passed through a degasifier, then filtered through a belt filter to remove a majority of the suspended sulfur as sulfur cake. A portion of this solution is diverted from the installation and passed through a hollow tubular ultrafiltration module (containing polyvinylidene fluoride ultrafiltration membrane (Model 10-HFM-180 Koch Membrane Systems, Wilmington, Massachusetts, USA). Feed temperature is 56°C and feed inlet pressure is 74 psig (510 kPa). Permeate from the ultrafiltration module is fed to a spiral wound membrane module containing a nanofiltration membrane (Model NF40-4040, FilmTec Corporation) at a feed inlet pressure of 540 psig (3.7 MPa) and a feed temperature of 59°C. A permeate flux of 4.1 $1/hr/m^2$ is observed. Color due to permeation of the metal ion chelate through the nanofiltration membrane is observed, but metal ion chelate passage is determined to be less than 10 percent based on its feed concentration in this run.

Example 5

Similarly to the procedure of Example 2, a solution containing FeHEDTA is contacted with a hydrocarbon gas stream contaminated with $H_2S$. A portion of this solution, containing 1.66 percent Fe by weight, is placed in a loop containing a feed tank, heater, pump, and a membrane device holding approximately 0.025 $m^2$ of FILMTEC® NF40 nanofiltration membrane. In contact with a calibration test solution of 0.5 percent aqueous NaCl solution, the NF40 membrane exhibits a 33-35 percent sodium chloride rejection, measurable by chloride ion titration. About 1300 grams of the FeHEDTA solution are pumped through the membrane holder at various adjusted pressures, and both the retentate and concentrate are recycled to the feed tank. Periodically, 25 ml samples of feed and permeate are withdrawn for iron chelate analyses, from which FeHEDTA rejections are calculated. Permeate fluxes are also measured. Results are shown in Table 2. Average FeHEDTA rejection is 95 percent at pressures of 550 psig (3.8 MPa) and higher.

Table 2

| Sample No. | Feed pressure (psig) (MPa) | Feed Temperature (°C) | Permeate Flux (ml/min) | FeHEDTA Rejection (%) |
|---|---|---|---|---|
| 1 | 550 (3.8) | 31.2 | 6.20 | 96.2 |
| 2 | 350 (2.4) | 30.2 | 1.18 | 86.5 |
| 3 | 550 (3.8) | 31.8 | 4.30 | 95.6 |
| 4 | 450 (3.1) | 31.6 | -- | 86.9 |
| 5 | 650 (4.5) | 32.0 | 5.50 | 94.9 |
| 6 | 550 (3.8) | 30.8 | 3.75 | 93.3 |
| 7 | 750 (5.2) | 31.8 | 6.24 | 95.6 |

Example 6

An aqueous solution containing 2.08 percent dissolved iron, present as the FeEDTA chelate compound, is prepared. About 1300 g of this solution is used as a feed in the same loop as in Example 5, following the same general procedure. An FN40 nanofiltration membrane is used, and feed pressure is adjusted from 550 psig (3.8 MPa) to 850 psig (5.9 MPa) in 50 psig (0.35 MPa) increments. Permeate fluxes are measured, and samples of feed and permeate are analyzed for FeEDTA content. Results are shown in Table 3. FeEDTA rejection is found to be 97.8 to 99.1 percent, the higher rejection numbers being found at the higher operating pressures.

Table 3

| Sample No. | Feed pressure (psig) (MPa) | Feed Temperature (°C) | Permeate Flux (ml/min) | FeEDTA Rejection (%) |
|---|---|---|---|---|
| 1 | 550 (3.8) | 31.0 | 1.69 | 97.8 |
| 2 | 600 (4.1) | 29.8 | 2.30 | 97.7 |
| 3 | 650 (4.5) | 29.6 | 3.05 | 98.5 |
| 4 | 700 (4.8) | 29.6 | 3.80 | 98.7 |
| 5 | 750 (5.2) | 29.4 | 4.00 | 99.1 |
| 6 | 800 (5.5) | 29.6 | 4.80 | 99.2 |
| 7 | 850 (5.9) | 29.6 | 6.00 | 99.1 |

**Claims**

1. A process for the removal of hydrogen sulfide from a gaseous stream comprising:

   a) contacting the gaseous stream with a reaction solution comprising an oxidizing polyvalent metal ion bound to a monomeric chelant so as to convert hydrogen sulfide to elemental sulfur;

   b) separating the reaction solution containing elemental sulfur suspended therein from the gaseous stream;

   c) treating at least a portion of the separated reaction solution by a filtration step to produce a fully clarified reaction solution filtrate essentially free of suspended sulfur;

d) contacting the fully clarified reaction solution with a nanofiltration membrane to produce a permeate portion comprising water and solutes of up to 225 molecular weight dissolved therein, and a nonpermeate concentration portion comprising water and the polyvalent metal ion bound to the monomeric chelant;

e) combining the nonpermeate concentrate portion with any of the separated reaction solution not converted to fully clarified reaction solution to form a combined stream;

f) oxidizing the polyvalent metal ion in the combined stream to produce a regenerated reaction solution; and

g) recycling the regenerated reaction solution to (a).

2. A process according to Claim 1, wherein in step c, at least a portion of the elemental sulfur is removed from the reaction solution in a first filtration step to produce a partially clarified reaction solution and at least a portion of the partially clarified reaction solution is filtered in a second filtration step to produce the said fully clarified reaction solution filtrate.

3. A process according to Claim 1 or Claim 2, wherein the reaction solution separated from contact with the gaseous stream is treated with a degasifier prior to filtration.

4. A process according to any one of Claims 1 to 3, wherein the filtration step providing said fully clarified reaction solution is effected by means of a cross-flow filtration device.

5. A process according to Claim 4, wherein the cross-flow filtration device contains a microfiltration or ultrafiltration membrane.

6. A process according to Claim 5, wherein the cross-flow filtration device consists of a hollow fiber, tubular, spiral-wound, or plate-and-frame device.

7. A process according to any one of Claims 1 to 6, wherein at least 90 percent of the polyvalent metal ion bound to the monomeric chelant in the fully clarified reaction solution is recovered in the nonpermeate concentrate portion.

8. A process according to any one of Claims 1 to 7, wherein the nanofiltration membrane has an oxalate ion permeation rate at least five-fold greater than that of the polyvalent metal ion bound to the monomeric chelant at operation conditions effective for the removal of water as permeate.

9. A process according to any one of the preceding claims, wherein the oxidizing polyvalent metal ion is ferric ion.

10. A process according to Claim 9, wherein the monomeric chelant is selected from nitrilotriacetic acid, ethylene-diamine-N,N,N',N'-tetraacetic acid, N-hydroxyethyl ethylenediamine-N,N',N'-triacetic acid, citric acid, and salts derived therefrom.

11. A process according to any one of the preceding claims, wherein the gaseous stream is geothermal steam vapor.

**Patentansprüche**

1. Verfahren zum Entfernen von Schwefelwasserstoff aus einem Gasstrom, umfassend:

a) Inkontaktbringen des Gasstroms mit einer Reaktionslösung, umfassend ein oxidierendes polyvalentes Metallion, das an einen monomeren Chelant gebunden ist, um Schwefelwasserstoff zu elementarem Schwefel zu überführen,
b) Abtrennen der Reaktionslösung, die elementaren Schwefel darin suspendiert enthält, aus dem Gasstrom,
c) Behandeln mindestens eines Teils der abgetrennten Reaktionslösung durch einen Filtrationsschritt, um ein vollständig geklärtes Reaktionslösungsfiltrat herzustellen, das im wesentlichen frei von suspendiertem Schwefel ist,
d) Inkontaktbringen der vollständig geklärten Reaktionslösung mit einer Nanofiltrationsmembran, um einen Permeatteil herzustellen, der Wasser und gelöste Stoffe bis zu einem Molekulargewicht von 225 gelöst darin umfaßt und einen Nichtpermeatkonzentrationsteil, der Wasser und das polyvalente Metallion, gebunden an den monomeren Chelant umfaßt,

e) Vereinigen des Nichtpermeatkonzentrationsteils mit jeglichen Teilen der abgetrennten Reaktionslösung, die nicht zu einer vollständig geklärten Reaktionslösung überführt wurden, um einen kombinierten Strom zu bilden,

f) Oxidieren des polyvalenten Metallions in dem kombinierten Strom, um eine regenerierte Reaktionslösung herzustellen, und

g) Rezyklisieren der regenerierten Reaktionslösung zu a).

2. Verfahren nach Anspruch 1, worin in Schritt c) mindestens ein Teil des elementaren Schwefels aus der Reaktionslösung in einem ersten Filtrationsschritt entfernt wird, um eine teilweise geklärte Reaktionslösung herzustellen und mindestens ein Teil der teilweise geklärten Reaktionslösung in einem zweiten Filtrationsschritt filtriert wird, um das vollständig geklärte Reaktionslösungsfiltrat herzustellen.

3. Verfahren nach Anspruch 1 oder Anspruch 2, worin die Reaktionslösung, die vom Kontakt mit dem Gasstrom abgetrennt worden war, mit einem Entgasungsmittel vor der Filtration behandelt wird.

4. Verfahren nach einem der Ansprüche 1 bis 3, worin der Filtrationsschritt, der die vollständig geklärte Reaktionslösung ergibt, mittels einer Querstromfiltrationsvorrichtung durchgeführt wird.

5. Verfahren nach Anspruch 4, worin die Querstromfiltrationsvorrichtung eine Mikrofiltrations- oder Ultrafiltrationsmembran enthält.

6. Verfahren nach Anspruch 5, worin die Querstromfiltrationsvorrichtung aus einer Hohlfaser, einer röhrenförmigen, einer spiralig gewundenen oder einer Rahmenvorrichtung besteht.

7. Verfahren nach einem der Ansprüche 1 bis 6, worin mindestens 90 % des polyvalenten Metallions, das an den monomeren Chelant in der vollständig geklärten Reaktionslösung gebunden ist, in dem Nichtpermeatkonzentrationsteil wiedergewonnen wird.

8. Verfahren nach einem der Ansprüche 1 bis 7, worin die Nanofiltrationsmembran eine Oxalation-Permeationsgeschwindigket aufweist, die mindestens fünf mal größer ist als die des polyvalenten Metallions, das an den monomeren Chelant gebunden ist, unter Betriebsbedingungen, die wirksam zur Entfernung von Wasser als Permeat sind.

9. Verfahren nach einem der vorhergehenden Ansprüche, worin das oxidierende polyvalente Metallion ein Eisen III-Ion ist.

10. Verfahren nach Anspruch 9, worin der monomere Chelant ausgewählt wird aus Nitrilotriessigsäure, Ethylendiamin-N,N,N',N'-tetraessigsäure, N-Hydroxyethylethylendiamin-N,N',N'-triessigsäure, Zitronensäure und davon abgeleiteten Salzen.

11. Verfahren nach einem der vorhergehenden Ansprüche, worin der Gasstrom geothermischer Wasserdampf ist.

**Revendications**

1. Procédé pour éliminer l'acide sulfhydrique d'un courant gazeux comprenant les étapes consistant à :

a) mettre le courant gazeux en contact avec une solution réactionnelle comprenant un ion métallique polyvalent oxydant lié à un agent de chélation monomère de manière à convertir l'acide sulfhydrique en soufre élémentaire ;

b) séparer du courant gazeux la solution réactionnelle, contenant le soufre élémentaire en suspension dans la solution ;

c) traiter, au cours d'une étape de filtration, au moins une partie de la solution réactionnelle séparée, afin d'obtenir un filtrat de solution réactionnelle totalement clarifiée, essentiellement exempt de soufre en suspension ;

d) mettre la solution réactionnelle totalement clarifiée en contact avec une membrane de nanofiltration afin d'obtenir une portion de perméat comprenant de l'eau et des solutés dissous ayant une masse moléculaire allant jusqu'à 225 et une partie de concentré n'ayant pas traversé par perméation comprenant de l'eau et l'ion polyvalent lié à l'agent de chélation monomère ;

e) combiner la partie de concentré n'ayant pas traversé par perméation à n'importe quelle partie de la solution réactionnelle séparée non convertie en solution réactionnelle totalement clarifiée pour obtenir un courant mixte ;

f) oxyder l'ion métallique polyvalent dans le courant mixte afin d'obtenir une solution réactionnelle régénérée ; et

g) recycler la solution réactionnelle régénérée en (a).

2. Procédé selon la revendication 1, dans lequel à l'étape c, au moins une partie du soufre élémentaire est retirée de la solution réactionnelle au cours d'une première étape de filtration afin d'obtenir une solution réactionnelle en partie clarifiée et au moins une partie de la solution réactionnelle en partie clarifiée est filtrée lors d'une seconde étape de filtration afin d'obtenir ledit filtrat de solution réactionnelle totalement clarifiée.

3. Procédé selon l'une des revendications 1 ou 2, dans lequel la solution réactionnelle n'entrant pas en contact avec le courant gazeux est traitée à l'aide d'un dégazeur avant la filtration.

4. Procédé selon l'une des revendications 1 à 3, dans lequel l'étape de filtration permettant d'obtenir ladite solution réactionnelle totalement clarifiée est réalisée au moyen d'un filtre à courant transversal.

5. Procédé selon la revendication 4, dans lequel le filtre à courant transversal contient une membrane de microfiltration ou d'ultrafiltration.

6. Procédé selon la revendication 5, dans lequel le filtre à courant transversal est constitué d'un dispositif tubulaire, à fibre creuse, à cadres et à plateaux ou en spirale.

7. Procédé selon l'une des revendications 1 à 6, dans lequel au moins 90% de l'ion métallique polyvalent lié à l'agent de chélation monomère dans la solution réactionnelle totalement clarifiée se retrouve dans la partie de concentré n'ayant pas traversé par perméation.

8. Procédé selon l'une des revendications 1 à 7, dans lequel la membrane de nanofiltration a une vitesse de perméation de l'ion oxalate au moins cinq fois supérieure à celle de l'ion métallique polyvalent lié à l'agent de chélation monomère dans des conditions d'exploitation appropriées pour éliminer l'eau jouant le rôle de perméat.

9. Procédé selon l'une des revendications précédentes, dans lequel l'ion métallique polyvalent oxydant est l'ion ferrique.

10. Procédé selon la revendication 9, dans lequel l'agent de chélation monomère est choisi parmi l'acide nitrilotriacétique, l'acide éthylènediamine-N-N-N'-N'-tétracétique, l'acide N-hydroxyéthyléthylènediamine N,N',N'-triacétique, l'acide citrique et des sels dérivés de ceux-ci.

11. Procédé selon l'une des revendications précédentes, dans lequel le courant gazeux est de la vapeur géothermique.

# Figure 1

# Figure 2